# EUROPEAN PATENT APPLICATION

(11) **EP 2 995 976 A1**
(43) Date of publication of application: **16.03.2016**
(21) Application number: 13883877.6
(22) Date of filing: 09.05.2013
(51) Int. Cl.: G02B 3/14, G02B 13/00

(54) **VARIFOCAL LENS**

(71) Applicant: The University of Tokyo, Tokyo 113-8654 (JP)
(72) Inventor: OKU, Hiromasa, Tokyo 113-8654 (JP); WANG, Lihui, Tokyo 113-8654 (JP); ISHIKAWA, Masatoshi, Tokyo 113-8654 (JP)
(74) Representative: Piotrowicz, Pawel Jan Andrzej
(86) International application number: PCT/JP2013/062998
(87) International publication number: WO 2014/181419

(57) **Abstract**

The present invention provides a varifocal lens that is capable of exhibiting high lens performance even with low lens power. The present invention also provides a varifocal lens capable of realizing a comparatively large aperture. A first elastic membrane of the present invention is arranged between a first medium and a second medium. The first elastic membrane is capable of elastic deformation by pressure from the first medium or the second medium. A drive section causes change in curvature of the first elastic membrane by causing variation in pressure or volume of the first medium or the second medium. The first tensile force applying section applies isotropic tensile force to the first elastic membrane.

## Description

### Technical Field

The present invention relates to a varifocal lens.

### Background art

A varifocal lens configured with an elastic membrane arranged at a boundary region between a first liquid and a second liquid is disclosed in patent publication 1 and non-patent publication 1 below. With this lens, refractive index of the first liquid and refractive index of the second liquid are different, and the elastic membrane is used in order to maintain a boundary surface shape between the two liquids.

With this varifocal lens, by applying pressure to either liquid body (for example, the second liquid), it is possible to change the curvature of the elastic member (namely the curvature of the boundary surface shape between the two liquids), and in this way it is possible to adjust optical power as a lens (so-called lens power).

Generally, with a lens that uses a liquid boundary shape, if lens diameter is made large then the effect of gravity acting on the fluid will become dominant over surface tension of the liquid, and as a result it is not possible to ignore the effects of gravity on lens shape. If an elastic membrane is used, there is the advantage that it is possible to reduce this effect due to gravity.

### Citation list

### Patent literature

### [Patent Publication 1]

Japanese patent laid-open No. 2004-233945

### Non-patent literature

### [Non-patent Publication 1]

Lihui Wang, Hiromasa Oku and Masatoshi Ishikawa "Variable-focus lens with 30mm optical aperture based on liquid-membrane-liquid structure" Appl. Phys. Lett. 102, 131111 (2013)

### Summary of the invention

### Technical Problem

With the varifocal lens that has been described above, it is difficult to make the specific gravity (or density) of the first liquid and the second liquid having different refractive indexes completely equal. For example, although it is possible to make a difference between the densities of two liquids approach zero in a particular temperature range by using additives, normally density difference in different temperature ranges will become large.

If a density difference arises in this way, a boundary surface between the two liquids is distorted slightly by the effects of gravity, and as a result the elastic membrane itself is also slightly distorted. If this happens, a problem will arise whereby it is difficult to obtain desired optical performance as a lens. This distortion becomes more noticeable with increasing diameter of the lens, and this problem is an obstacle to increasing the diameter of a lens. According to the inventor's knowledge, in particular, when amount of deformation of an elastic membrane is small, the effect of this distortion is easily seen.

The present invention has been conceived in view of the above-described situation. An object of the present invention is to provide a varifocal lens capable of exhibiting a high lens performance. Another object of the present invention is to provide a varifocal lens capable of maintaining lens performance even if lens diameter is made large.

### Solution to Problem

The present invention has a configuration disclosed in any of the following aspects.

### (Aspect 1)

A varifocal lens, provided with a housing section, a first elastic membrane, a first medium, a second medium, a drive section and a first tensile force applying section, wherein
the housing section is capable of passing light along an optical axis direction of a lens,
and the housing section is provided with a first space and a second space arranged along the optical axis direction,
the first elastic membrane is arranged between the first space and the second space, and is configured to partition between the first space and the second space by extending in a direction that intersects the optical axis direction,
the first medium is filled into the first space,
the second medium is filled into the second space,
refractive indices of the first medium and the second medium are respectively different,
the first elastic membrane is arranged between the first medium and the second medium,
and the first elastic membrane is capable of being elastically deformed by a pressure difference between the first medium and the second medium,
the drive section changes curvature of the first elastic membrane by causing variation in pressure or volume of the first medium or the second medium, and
the first tensile force applying section applies isotropic tensile force to the first elastic membrane.

A pressure difference is caused between the first medium and the second medium by the drive section causing variation in pressure or volume of the first medium or the second medium, and as a result it is possible to change the curvature of the first elastic membrane.

### (Aspect 2)

The varifocal lens of aspect 1, wherein the first medium and the second medium are both liquid.

### (Aspect 3)

The varifocal lens of aspect 1 or aspect 2, wherein the first tensile force applying section comprises
a holding section for holding the periphery of the first elastic membrane, and
a pressing section for generating isotropic tensile stress in the first elastic membrane by pressing the vicinity of the periphery of the first elastic membrane, in a state of being held by the holding section, substantially uniformly in the optical axis direction.

### (Aspect 4)

The varifocal lens of any one of aspects 1 - 3, wherein a chromatic dispersion characteristic of the first medium and a chromatic dispersion characteristic of the second medium are made respectively different characteristics.

### (Aspect 5)

The varifocal lens of any one of aspects 1 - 4, further comprising a second elastic membrane, a third medium, and a second tensile force applying section, wherein
the housing section is further provided with a third space,
the third space is arranged at a position along the optical axis direction with respect to the first space and the second space,
the second elastic membrane is arranged between the second space and the third space, and is configured to partition between the second space and the third space by extending in a direction that intersects the optical axis direction,
the third medium is filled into the third space,
refractive index of the third medium is different to the refractive index of the first medium or the second medium,
the second elastic membrane is arranged between the second medium and the third medium,
and the second elastic membrane is capable of being elastically deformed by a pressure difference between the second medium and the third medium, wherein
the drive section causes change in curvature of the second elastic membrane by causing variation in pressure or volume of the second medium or the third medium, and
the second tensile force applying section applies isotropic tensile force to the second elastic membrane.

A pressure difference is caused between the second medium and the third medium by the drive section causing variation in pressure or volume of the second medium or the third medium, and as a result it is possible to change the curvature of the second elastic membrane.

### (Aspect 6)

The varifocal lens of aspect 5, wherein the tensile force applied to the first elastic membrane and the tensile force applied to the second elastic membrane are different in magnitude.

### (Aspect 7)

The varifocal lens of aspect 5 or aspect 6, wherein a chromatic dispersion characteristic of the first elastic membrane and a chromatic dispersion characteristic the second elastic membrane are made different characteristics.

### (Aspect 8)

An imaging device provided with the varifocal lens of any one of aspects 1 - 7.

### (Aspect 9)

A projection device provided with the varifocal lens of any one of aspects 1 - 7.

### Advantageous Effect Of The Invention

Since the present invention provides the previously described structures, it is possible to provide a varifocal lens that is capable of exhibiting high lens performance even with low lens power. Further, according to the present invention, it becomes possible to provide a varifocal lens of large aperture that has high lens performance.

### Brief description of the drawings

Fig. 1 is a schematic cross-sectional diagram of a varifocal lens of a first embodiment of the present invention.
Fig. 2 is an explanatory drawing showing an enlargement of the main sections of Fig. 2.
Fig. 3 is an explanatory drawing of isotropic tensile force that is applied to the elastic membrane of the first embodiment.
Fig. 4 is a graph showing simulation results of a practical example. The vertical axis of Fig. 4A represents the extent to which points where displacement of the elastic membrane surface is maximum are shifted from the center of the membrane, and the horizontal axis represents lens optical power. The vertical axis of Fig. 4B represents root mean square of a difference between ideal wavefront and wavefront that has been estimated using a finite element method (so-called wavefront aberration), and the horizontal axis represents lens optical power.
Fig. 5 is a schematic cross-sectional diagram of a varifocal lens of a second embodiment of the present invention.

### Description of the Embodiments

### (Structure Of First Embodiment)

A varifocal lens of a first embodiment of the present invention (hereafter sometimes abbreviated simply to "lens") will be described below based on the attached drawings. The lens of this embodiment comprises a housing section 1, first elastic membrane 2, first medium 3, second medium 4, drive section 5, and first tensile force applying section 6.

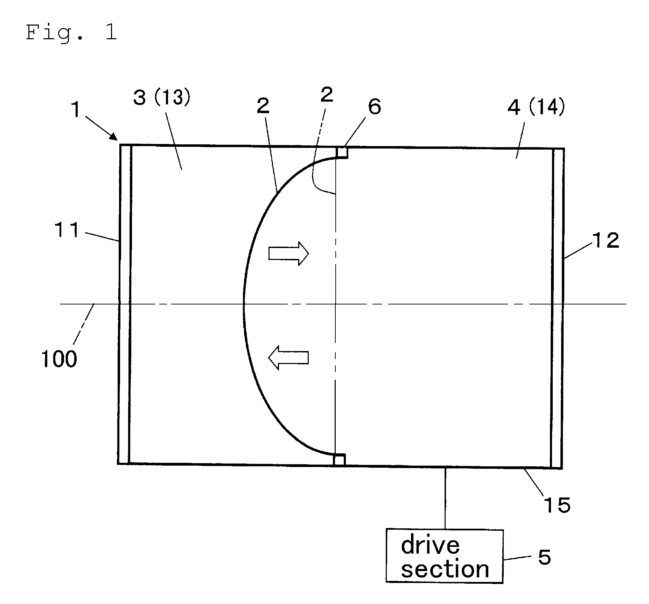

The housing section 1 is capable of passing light along the direction of the optical axis 100 of the lens (shown by the alternate long and short dash line in Fig. 1). Specifically, the housing section 1 is provided with a first window portion 11 and a second window portion 12 arranged opposite to each other and spaced apart in the optical axis direction. The first window portion 11 and the second window portion 12 are transparent where light is to pass through, and as a result it is possible for light to pass through in the direction of the optical axis 100 via these window portions 11 and 12. The term transparent in this specification means that attenuation of light in a wavelength band subjected to the lens operation is as small as is practically required. Consequently, for example, if the lens is for infrared light, even if it is nontransparent to light in bands other than the infrared (for example, visible light) it can be called transparent with the meaning in this specification. However, in subsequent description it will be assumed that the lens of this embodiment is for visible light unless otherwise stated. The housing section 1 this embodiment has a cylindrical configuration with both ends closed off by the first window portion 11 and the second window portion 12, but this is not limiting, and an appropriate shape may be selected, such as an angular tube.

The housing section 1 is provided with a first space 13 and a second space 14 arranged in line with each other along the direction of the optical axis 100. More specifically, the housing section 1 of this embodiment is provided with a cylindrical sidewall 15 between the first window portion 11 and the second window portion 12, connecting the two window portions, and in this way an internal space is formed inside the housing section 1. This internal space is partitioned by a first elastic membrane 2, which will be described later, to form the previously described first space 13 and second space 14. That is, between the first space 13 and the second space 14 is partitioned by the first elastic membrane 2.

The first elastic membrane 2 is arranged between the first space 13 and the second space 14, and extends in a direction intersecting the direction of the optical axis 100 (in this example, an orthogonal direction). In this way, as was described previously, the first elastic membrane 2 partitions between the first space 13 and the second space 14.

A first medium 3 is filled into the first space 13, and a second medium 4 is filled into the second space 14. Here, with this embodiment, sealing of the first space 13 and the second space 14 is not essential, and it is also possible to have a state where either of the first medium 3 and the second medium 4 is practically open to the outside (that is, a state at atmospheric pressure). For a medium that is to be increased in pressure or reduced in pressure, it is preferable to seal off so that it is possible to vary pressure.

Refractive indexes of the first medium 3 and the second medium 4 are different from each other. On the other hand, specific gravity (density) of the first medium 3 and the second medium 4 are preferably equal in a temperature region in which it is expected that the lens will be used. A combination of these types of medium may be appropriately selected, but it is possible to use a combination of, for example, PDMS (Poly-Dimethyl-Siloxane) and pure water. Refractive indexes are respectively 1.40 and 1.33. Either may be used as the first medium 3. With this example, liquid is used as the first medium 3 and the second medium 4. However, as these mediums, besides a liquid, it is also possible to have states such as sol form, gel form, or an elastic body etc. In short, as the medium any material may be used that can cause variation in pressure received from the drive section 5 to act at an interface between the two mediums, and cause this interface to bulge in one direction.

The first elastic membrane 2 is arranged between the first medium 3 and the second medium 4. As a material for the first elastic membrane 2, it is possible to use a high transparency silicone resin. However, the first elastic membrane 2 is not limited to being silicone resin, and may be any material that is capable of elastic deformation due to a pressure difference between the first medium 3 and the second medium 4. The first elastic membrane 2 of this example is formed into a thin circular sheet. Also, with this example, the first medium 3 and the second medium 4 are in direct contact with the first elastic membrane 2, but these mediums may also be in indirect contact with the first elastic membrane 2 via some sort of a pressure transmission substance. In short, it is only necessary that pressure from the first medium 3 or the second medium 4 is capable of being transmitted to the first elastic membrane 2.

The drive section 5 causes change in curvature of the first elastic membrane 2 by causing variation in the pressure or volume of the first medium 3 or the second medium 4. More specifically, the drive section 5 of this example is connected to the second space 14, and can cause increase or decrease in the pressure of the second medium 4. The specific structure for realizing the drive section 5 is not particularly limited, but it is possible to use, for example, a syringe pump.

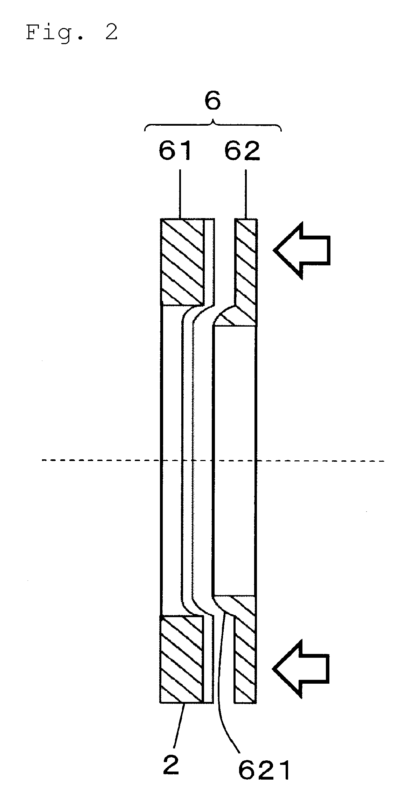

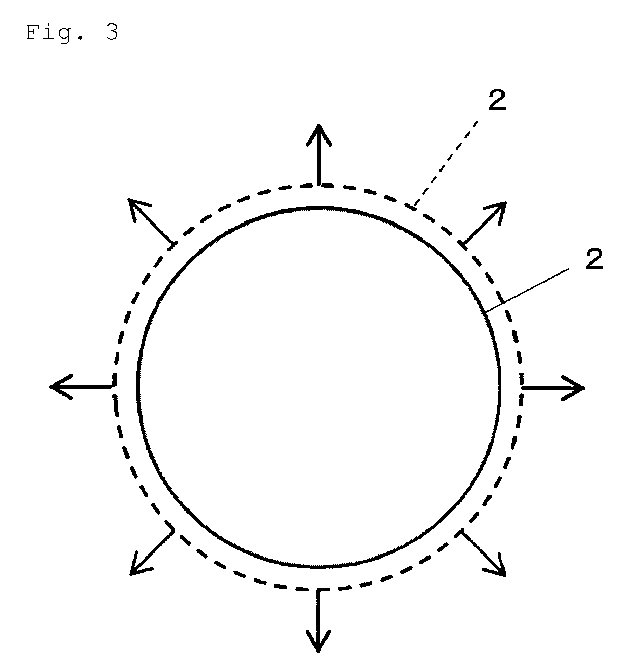

The first tensile force applying section 6 applies isotropic tensile force to the first elastic membrane 2. More specifically, the first tensile force applying section 6 of this example comprises a holding section 61 for holding the outer periphery of the first elastic membrane 2, and a pressing section 62 for generating isotropic tensile stress in the first elastic membrane 2 by pressing the vicinity of the outer periphery of the first elastic membrane 2, that is being held by the holding section 61, substantially uniformly in the direction of the optical axis 100 (refer to Fig. 2). Fig. 2 depicts the thickness of the elastic membrane 2 in exaggerated form, and the dimensions are not completely accurate. Fixing of the outer periphery of the first elastic membrane 2 and the holding section 61 may be carried out by deposition using plasma processing of the contact surfaces, for example, or by adhesion using an adhesive. The pressing section 62 has a projection section 621 projecting in the direction of the optical axis 100, and by pressing this project ion sect ion 621 against the first elastic membrane 2 it is possible to apply isotropic tensile stress to the first elastic membrane 2 (refer to Fig. 3). Fig. 3 is for schematically describing the direction of tensile stress, and dimensions are not accurate. Also, the projection section 621 of this example is formed in a circular shape, looking from the optical axis direction.

### (Operation of first embodiment)

Next, operation of the varifocal lens of this embodiment will be described.

First, in an initial state a pressure difference between the first medium 3 and the second medium 4 is made 0 [Pa]. Specifically, hydrostatic pressure between the two mediums is equalized. In this state the first elastic membrane 2 is between the first medium 3 and the second medium 4, giving a flat state (specifically, curvature = 0 or radius of curvature = ∞). The first elastic membrane 2 in this state is shown by the alternate long and two short dashes line in Fig. 1.

Here, with a conventional varifocal lens, unintended microscopic deformation arises in the elastic membrane between the mediums, as a result of gravity, due to microscopic density differences between the two mediums. As a result, with a conventional lens, particularly when lens power is small (namely when membrane curvature is small), there may situations where it is not possible to exhibit sufficient optical performance.

By contrast, with the varifocal lens of this embodiment, since isotropic tensile stress is applied to the first elastic membrane 2 by the first tensile force applying section 6, it is possible to make deformation of the first elastic low, even if there is a small density difference between the first medium 3 and the second medium 4. Specifically, with this embodiment there is the advantage that it is possible to improve optical performance of the lens, particularly when lens power is small, by causing a reduction in the effect of gravity due to density differences between the mediums. Also, since the effects of gravity as described above become more noticeable with increased diameter of the lens, the lens of this embodiment has the advantage that it is suitable to increasing diameter. That is, with the present embodiment it becomes possible to provide a varifocal lens having large aperture and high performance.

In the event that lens power (namely optical power) is changed, pressure is applied to the second medium 4 using the drive section 5. If this is done a pressure difference arises between the first medium 3 and the second medium 4, and a boundary between the two mediums moves to a position where the pressures of the two mediums balance out. In this way, as shown by the solid line in Fig. 1, the shape of the first elastic membrane 2 can be made to bulge out into a dome shape or a paraboloid shape. As result it is possible to change the lens power. In Fig. 1 the first elastic membrane 2 is made to bulge in a direction to the left in the drawing, but it is also possible to cause the first elastic membrane 2 to bulge in the opposite direction by making the pressure to the second medium 4 a negative pressure.

In the description of the first embodiment given above, hydrostatic pressure of the second medium 4 was changed using the drive section 5, but it is also possible to change the shape of the first elastic membrane 2 by increasing pressure or reducing pressure to the first medium 3.

Alternatively, as the drive section 5, it is possible to have a structure where the hydrostatic pressure of each medium is changed by causing movement of the position of the holding section 61 for holding the first elastic membrane 2 in the optical axis direction (for example, movement to the left or right in Fig. 1), and in this way change the shape of the first elastic membrane 2. If this is done there is the advantage that it is possible to make the overall size of the lens, including the drive section, small.

It is also possible to make the chromatic dispersion characteristic of the first medium 3 and the chromatic dispersion characteristic of the second medium 4 different characteristics. If this is done there is the advantage that it is possible to reduce chromatic aberration of the lens overall.

Further, with the lens of this embodiment, it is possible to improve the speed with which a deformed elastic membrane 2 restores to the initial position by applying pretension to the first elastic membrane 2. As a result, with this lens there is the advantage that it is possible to speed up lens focus position movement cycle.

### (Practical Example)

In order to test performance of the varifocal lens of the first embodiment described above, simulation was carried out using finite element analysis. Conditions were as follows.

first medium: pure water (reflective index 1.33, density 0.997 g/cm³)
second medium: PDMS liquid (poly-dimethyl-siloxane liquid) (refractive index 1.40, density 0.975 g/cm³)
first elasticmembrane: circular sheet of 30 mmdiameter, thickness 0.1 mm, Young's modulus five MPa, Poisson ratio 0.45

Also, with this simulation, it was stipulated that isotropic tensile stress was generated in the first elastic membrane by setting the temperature of the first elastic membrane 1° lower than a reference temperature (for example, temperature of the two mediums). A secant coefficient of thermal expansion for this membrane was set to 0.004. Conditions other than those stated above are the same as for the first embodiment described above.

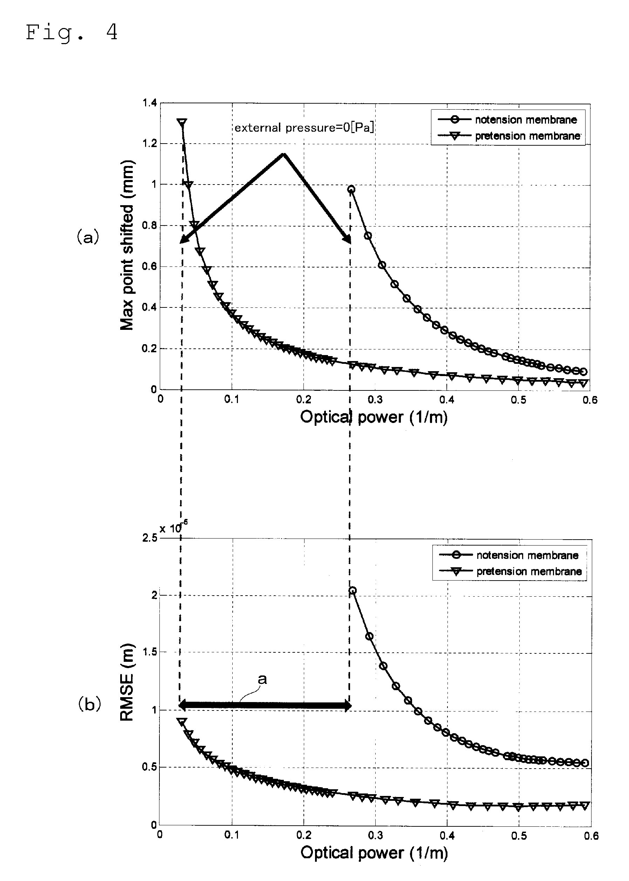

Results that were obtained using the above-described conditions are shown in Fig. 4. In this drawing, the symbol ○ represents results for the case where pretension is not applied to the membrane (specifically, a comparative example), while the symbol V represents results for the case where pretension is applied to the membrane (specifically, the practical example). External pressure in this drawing means pressure that is applied to the second medium 4 by the drive section 5.

As shown in Fig. 4(a), when external pressure = 0 (namely when pressure is not applied to the medium), with the example where there is no tension as a comparative example (symbol ○ in the drawing), an optical power of 0.27 is already being generated. This means that the membrane is already being deformed due to the density difference between the mediums. This constitutes a problem whereby it is not possible to provide optical power lower than that. By contrast, with the example of the practical example where there is tension (symbol V in the drawing), when external pressure = 0 a low optical power 0.03 is obtained. The difference between the two optical powers is shown by symbol a in Fig. 4(b). Accordingly, according to the lens of the previously described embodiment, it is possible to provide a varifocal lens of large aperture having low optical power.

Also, the vertical axis in Fig. 4(a) shows the extent to which maximum point of displacement of the elastic membrane is shifted from the center of the membrane (that is, the light beam center or optical axis), and shows that as this value approaches 0 symmetry of the interface shape is held (that is, good optical performance is obtained). When the same optical power is obtained, for example, when optical power is 0.3[l/m], with the example where there is no tension (○ symbol in the drawing), there is a shift of about 0.7 mm, while with the example where there is tension (symbol V in the drawing) there is only a shift of about 0.1mm. Accordingly, it will be understood that using the present embodiment makes it possible to provide a variable lens that has high optical performance even in a low optical power region.

Further, the vertical axis of Fig. 4(b) represents root-mean-square-error (RMSE) of a difference between an ideal wavefront and a wavefront estimated using a finite element method, and shows that as this value approaches 0 wavefront aberration becomes smaller (that is, good optical performance is obtained). When the same optical power is obtained, for example, when optical power is 0.3[l/m], with the example where there is no tension (○ symbol in the drawing), RMSE is about 15 µm, while with the example where there is tension (symbol V in the drawing) RMSE is kept low to about 2. 0 µm. From this also, it will be understood that using the present embodiment makes it possible to provide a variable lens that has high optical performance even in a low optical power region.

### (Second Embodiment)

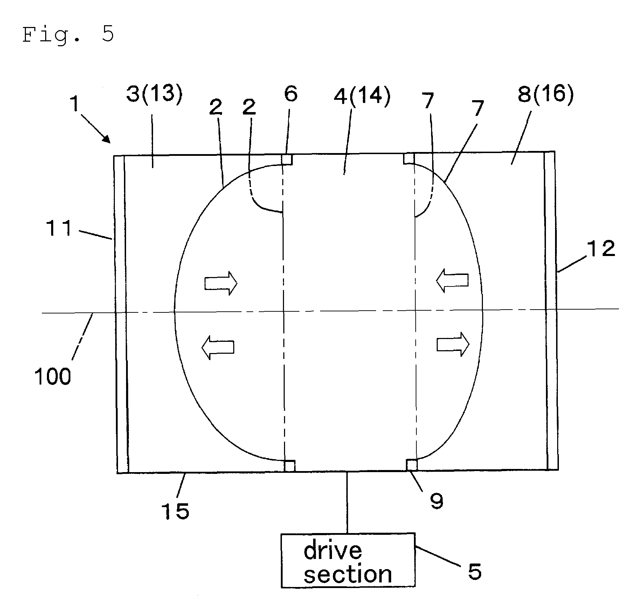

Next, a varifocal lens of a second embodiment of the present invention will be described with reference to Fig. 5. In the description of this second embodiment, structural elements that are basically common to the lens of the first embodiment described above will be assigned the same reference numerals, and redundant description be avoided.

The varifocal lens of the second embodiment further comprises a second elastic membrane 7, a third medium 8, and a second tensile force applying section 9. Also, the housing section 1 of this embodiment is further provided with a third space 16.

The third space 16 is arranged at a position in the direction of the optical axis 100 with respect to the first space 13 and the second space 14. More specifically, the third space constitutes a region that is enclosed by the second elastic membrane 7, the second window portion 12 and the sidewall 15.

The second elastic membrane 7 is arranged between the second space 14 and the third space 16, and extends in a direction that intersects the optical axis 100 (specifically in an orthogonal direction), and partitions between the second space 14 and the third space 16. The second elastic membrane 7 is arranged between the second medium 4 and the third medium 8. Further, the second elastic membrane 7 is capable of being elastically deformed by a pressure difference between the second medium 4 and the third medium 8. Also, with this embodiment, a chromatic dispersion characteristic of the first elastic membrane 2 and a chromatic dispersion characteristic the second elastic membrane 7 are made different characteristics. Other than this point, the second elastic membrane 7 can be configured in the same way as the first elastic membrane 2.

A third medium 8 is filled into the third space 16. Refractive index of the third medium 8 is a different to the refractive index of the first medium 3 and/or the second medium 4 such that it is possible to exhibit a lens action. Other than this point, the third medium 8 can be configured in the same way as the first medium 3 and the second medium 4.

The drive section 5 changes curvature of the second elastic membrane 7 by causing variation in pressure or volume of the second medium 4 or the third medium 8. More specifically, the drive section 5 of this example can drive the first elastic membrane 2 and the second elastic membrane 7 together by causing variation in pressure of the second medium 4. In the second embodiment, the initial pressure of the first medium 3 and the third medium 4 is the same, and the difference in pressure between these two mediums and the second medium 4 is made equal.

The second tensile force applying section 9 applies isotropic tensile force to the second elastic membrane 7. Here, with this second embodiment, the tensile force applied to the first elastic membrane 2 and the tensile force applied to the second elastic membrane 7 differ in magnitude. Apart from this point, the second tensile force applying section 9 can be configured the same as the first tensile force applying section 6.

### (Operation Of Second Embodiment)

With the varifocal lens of the second embodiment also, similarly to the first embodiment, the first elastic membrane 2 and the second elastic membrane 7 in the initial state are in a flat state (state shown by the alternate long and two short dashes line in Fig. 5). With the varifocal lens of the second embodiment, the pressure of the second medium 4 is changed by the drive section 5. In this way it is possible to change the curvature of the first elastic membrane 2 and the second elastic membrane 7. With the lens of the second embodiment, both the first elastic membrane 2 and the second elastic membrane 7 (more specifically the interfaces between the three mediums) exhibit a lens action. Accordingly, with the second embodiment it is possible to provide a varifocal lens having a plurality of single lenses.

Here, with this embodiment, the tensile force applied to the first elastic membrane 2 and the tensile force applied to the second elastic membrane 7 differ in magnitude. Further, with this embodiment, the initial pressure of the first medium 3 and the third medium 4 is the same, and the difference in pressure between these two mediums and the second medium 4 is equalized. By doing this, optical power arising in the two elastic membranes changes in accordance with tensile force to each membrane (refer to the solid line in Fig. 5). In this way, with the second embodiment, it is possible to provide a plurality of lenses of differing optical power by adjusting tensile force to the membranes.

Also, with the second embodiment, the chromatic dispersion characteristic of the first elastic membrane 2 and the chromatic dispersion characteristic of the second elastic membrane 7 are made different characteristics, and so there is the advantage that it is possible to reduce chromatic aberration of the lens overall.

Further, with the second embodiment since the plurality of single lenses are realized, there is the advantage that it becomes possible to exhibit a function as a zoom lens. Obviously membrane thicknesses and inter-membrane distance for each of the elastic membranes of this embodiment can be designed as appropriate to suit a zoom lens.

With the second embodiment, pressure of the second medium 4 was varied, but alternatively, or in addition, the pressure of another medium may be varied. In this case also, as has been explained for the first embodiment, there is the advantage that it is possible to provide a lens having low optical power and high optical performance. In this case, a drive section for varying that medium may be separately provided, and it is also possible to share the above described drive section.

Also, with the second embodiment, the chromatic dispersion characteristic of the first elastic membrane 2 and the chromatic dispersion characteristic of the second elastic membrane 7 are made different characteristics, but they may also be made the same characteristics. Also, in the second embodiment, it is possible to reduce chromatic aberration by adjusting the chromatic dispersion characteristic of each medium. Further, with this embodiment although the second tensile force applying section 9 is configured the same as the first tensile force applying section 6, the structures for applying tensile force to the membranes may be different.

Other structures and advantages of the second embodiment are basically the same as those of the previously described first embodiment, and so more detailed description will be omitted.

With the second embodiment, the second elastic membrane and the third medium have been provided, but it is also possible to laminate a greater number of elastic membranes and mediums, and in that case it is possible to realize a more complex lens structure. The structure of the elastic membranes etc. in this case can be understood from the previous description, and so detailed description is omitted.

Using the lens of each of the previously described embodiments, it is possible to configure an imaging device for a camera or the like, or a projection device for a liquid crystal projector etc.

The descriptions for each of the embodiments and the practical example are merely simple examples, and do not show the essential structure of the present invention. The structure of each part is not limited to the above description as long as it falls within the scope of the invention. For example, with each of the embodiments described above, tensile force has been applied to the elastic membrane using the pressing section 62, but this is not limiting, and it is also possible, for example, to attach the elastic membrane to a frame body having a higher coefficient of thermal expansion than the elastic membrane, and after applying tensile force to the membrane by heating, tensile force that has been applied to the elastic membrane is maintained by attaching this frame body to a separate support body of high rigidity. It is also possible for the refractive index of each of the mediums described above to be variously set in accordance with design objectives of the lens.

## Claims

1. A varifocal lens, comprising a housing section, a first elastic membrane, a first medium, a second medium, a drive section and a first tensile force applying section, wherein
the housing section is capable of passing light along an optical axis direction of a lens
and the housing section comprises a first space and a second space arranged along the optical axis direction,
the first elastic membrane is arranged between the first space and the second space, and is configured to partition between the first space and the second space by extending in a direction that intersects the optical axis direction,
the first medium is filled into the first space,
the second medium is filled into the second space,
refractive indices of the first medium and the second medium are respectively different,
the first elastic membrane is arranged between the first medium and the second medium,
and the first elastic membrane is configured to be capable of being elastically deformed by a pressure difference between the first medium and the second medium,
the drive section is configured to change curvature of the first elastic membrane by causing variation in pressure or volume of the first medium or the second medium, and
the first tensile force applying section applies isotropic tensile force to the first elastic membrane.

2. The varifocal lens according to claim 1, wherein the first medium and the second medium are both liquid.

3. The varifocal lens according to claim 1 or claim 2, wherein the first tensile force applying section comprises
a holding section for holding the periphery of the first elastic membrane, and
a pressing section for generating isotropic tensile stress in the first elastic membrane by pressing the vicinity of the periphery of the first elastic membrane, in a state of being held by the holding section, substantially uniformly in the optical axis direction.

4. The varifocal lens according to any one of claims 1 - 3, wherein a chromatic dispersion characteristic of the first medium and a chromatic dispersion characteristic of the second medium are made respectively different characteristics.

5. The varifocal lens according to any one of claims 1 - 4, further comprising a second elastic membrane, a third medium, and a second tensile force applying section, wherein
the housing section further comprises a third space,
the third space is arranged at a position along the optical axis direction with respect to the first space and the second space,
the second elastic membrane is arranged between the second space and the third space, and is configured to partition between the second space and the third space by extending in a direction that intersects the optical axis direction,
the third medium is filled into the third space,
the refractive index of the third medium is different to the refractive index of the first medium or the second medium,
the second elastic membrane is arranged between the second medium and the third medium,
and the second elastic membrane is capable of being elastically deformed by a pressure difference between the second medium and the third medium, wherein
the drive section causes change in curvature of the second elastic membrane by causing variation in pressure or volume of the second medium or the third medium, and
the second tensile force applying section applies isotropic tensile force to the second elastic membrane.

6. The varifocal lens according to claim 5, wherein the tensile force applied to the first elastic membrane and the tensile force applied to the second elastic membrane are different in magnitude.

7. The varifocal lens according to claim 5 or claim 6, wherein a chromatic dispersion characteristic of the first elastic membrane and a chromatic dispersion characteristic the second elastic membrane are made different characteristics.

8. An imaging device comprising the varifocal lens according to any one of claims 1 - 7.

9. A projection device comprising the varifocal lens according to any one of claims 1 - 7.
